**Europäisches Patentamt**

**European Patent Office**

**Office européen des brevets**

(19)

(11) Numéro de publication : **0 396 450 B1**

(12)

# FASCICULE DE BREVET EUROPEEN

(45) Date de publication du fascicule du brevet :
**10.11.93 Bulletin 93/45**

(51) Int. Cl.⁵ : **C01B 33/193**, C09C 1/30,
C08K 3/36

(21) Numéro de dépôt : **90401114.5**

(22) Date de dépôt : **25.04.90**

(54) **Silice sous forme de bille, procédé de préparation et son utilisation au renforcement des élastomères.**

(30) Priorité : **02.05.89 FR 8905812**

(43) Date de publication de la demande :
**07.11.90 Bulletin 90/45**

(45) Mention de la délivrance du brevet :
**10.11.93 Bulletin 93/45**

(84) Etats contractants désignés :
**AT BE CH DE DK ES FR GB GR IT LI LU NL SE**

(56) Documents cités :
**EP-A- 0 018 866**
**US-A- 4 738 838**
**CHEMICAL ABSTRACTS, vol. 106, no. 18, 4 mai**
**1987 Columbus, Ohio, USA page 128; colonne**
**de gauche; ref. no. 140518G**

(73) Titulaire : **RHONE POULENC CHIMIE**
**25 Quai Paul Doumer**
**F-92408 Courbevoie Cédex (FR)**

(72) Inventeur : **Chevallier, Yvonick**
**19, Allée des Géraniums**
**F-69150 Décines (FR)**

(74) Mandataire : **Dubruc, Philippe et al**
**RHONE-POULENC CHIMIE Service Brevets**
**Chimie 25, quai Paul-Doumer**
**F-92408 Courbevoie Cédex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une nouvelle silice de précipitation, son procédé de préparation et son utilisation dans le renforcement des élastomères.

On sait que l'on peut utiliser la silice précipitée comme charge renforçante dans les élastomères.

Cependant comme toute charge renforçante elle doit pouvoir se manipuler et s'incorporer facilement dans le mélange.

La silice se présente généralement sous forme de poudre. Mais la présentation sous forme pulvérulente n'est pas satisfaisante dans la mesure où elle entraîne un poussiérage important et une incorporation lente (densité apparente faible).

C'est pourquoi on a proposé une présentation sous forme granulée qui permet de résoudre convenablement les deux problèmes précédents mais qui peut entraîner souvent une dispersion insuffisante de la charge dans les élastomères, et procurer un degré de renforcement moindre pour ceux-ci par rapport à une charge sous forme poudre.

Pour obvier à cet inconvénient, une solution a été proposée dans le brevet européen n° 18866 au nom de la Demanderesse. On décrit dans ce document une silice sous forme de billes homogènes de taille moyenne supérieure à 80 $\mu$m, de surface BET de 100 à 300 m$^2$/g et de densité d'environ 0,29.

Ce type de produit s'est montré particulièrement intéressant pour ses propriétés dans le renforcement des élastomères.

Toutefois le besoin s'est fait sentir d'améliorer encore les produits obtenus sur un ou éventuellement plusieurs aspects à la fois.

C'est ainsi que le problème s'est posé d'avoir des produits se dispersant mieux dans les élastomères et notamment plus denses.

L'objet principal de l'invention est donc la mise au point d'un produit d'une morphologie bien spécifique, à savoir sous forme de bille, dense, présentant une bonne dispersibilité dans les élastomères et pouvant ainsi leur conférer des propriétés améliorées.

Dans ce but, et selon un premier mode de réalisation, la silice selon l'invention est caractérisée en ce qu'elle se présente sous forme de bille sensiblement sphérique de taille moyenne d'au moins 80$\mu$m et en ce qu'elle possède une surface BET d'au plus 130 m2/g, une densité de remplissage à l'état tassé (DRT) supérieure à 0,32, un volume poreux total d'au moins 1,6 cm3/g.

Selon un second mode de réalisation, la silice de l'invention est caractérisée en ce qu'elle se présente sous forme de bille sensiblement sphérique de taille moyenne d'au moins 80$\mu$m et en ce qu'elle possède une surface BET comprise entre 100 et 130 m2/g, une densité comprise entre 0,28 et 0,32, un volume poreux total compris entre 1,6 et 3,3 cm3/g.

Enfin, selon un troisième mode de réalisation, la silice de l'invention est caractérisée en ce qu'elle se présente sous forme de bille sensiblement sphérique de taille moyenne d'au moins 80$\mu$m et en ce qu'elle possède une surface BET inférieure à 100 m2/g et une densité comprise entre 0,28 et 0,32.

Par ailleurs, l'invention concerne aussi un procédé de préparation de silices telles que ci-dessus , qui est du type comprenant l'obtention d'une suspension de silice par réaction d'un silicate avec un agent acidifiant et précipitation, puis le séchage par atomisation de cette suspension et ce procédé est caractérisé en ce qu'on réalise la précipitation selon les étapes suivantes :

- on forme un pied de cuve comportant au moins une partie de la quantité totale du silicate engagé dans la réaction et un électrolyte,
- on ajoute l'agent acidifiant audit pied de cuve jusqu'à l'obtention d'une valeur du pH du milieu réactionnel d'environ 7,
- on ajoute enfin le cas échéant simultanément au milieu réactionnel de l'agent acidifiant et la quantité restante de silicate ;
  et en ce qu'on sèche une suspension présentant un taux de matière sèche d'au moins 18 % en poids et un pH d'au moins 4.

D'autres caractéristiques et avantages de l'invention seront mieux compris à la lecture de la description et des exemples non limitatifs qui vont suivre.

Comme on l'a vu plus haut, la silice de l'invention se présente sous la forme d'une bille ou d'une perle. Cette bille est sensiblement sphérique.

Les billes de silice de l'invention présentent une taille moyenne d'au moins 80$\mu$m.

Selon une variante particulière de l'invention, cette taille moyenne est d'au plus 300$\mu$m. Selon d'autres modes de réalisation, cette taille moyenne est supérieure à 100$\mu$m, notamment à 150 $\mu$m et se situe de préférence entre 100 et 250 $\mu$m. Cette taille moyenne est déterminée selon la norme NF X 11507 (décembre 1970) par tamisage à sec et détermination du diamètre correspondant à un refus cumulé de 50%

Une autre caractéristique des produits de l'invention est leur surface BET. La surface BET est déterminée selon la méthode de BRUNAUER-EMMET-TELLER décrite dans The Journal of the American Chemical Society vol. 60, page 309, February 1938 et selon la norme NFT 45007 (novembre 1987) (5.11.2).

Cette surface BET est d'au plus 130 m²/g selon le premier mode de réalisation. Elle est comprise entre 100 et 130 m2/g pour le deuxième mode de réalisation et inférieure à 100 m2/g pour le troisième.

Selon des variantes particulières de l'invention, pour le premier mode, cette surface BET est inférieure à 100 m2/g et pour le premier et le troisième mode, cette surface peut être d'au plus 95 m2/g, généralement d'au moins 50 m2/g et notamment comprise entre 60 et 90 m2/g.

Par ailleurs, les silices de l'invention présentent un volume poreux total d'au moins 1,6 cm3/g et plus particulièrement d'au moins 1,8 cm3/g.

Il peut être notamment supérieur à 2 et plus particulièrement compris entre 2,4 et 3,3 cm3/g. En ce qui concerne le second mode de réalisation, il est d'au plus égal à 3,3 cm3/g, cette limite supérieure étant préférentielle pour les premier et troisième modes.

On précise ici et pour tout le reste de la description que les volumes poreux donnés sont mesurés par porosimétrie au mercure, les diamètres de pores étant calculés par la relation de WASHBURN avec un angle de contact theta = 130° et une tension superficielle gamma = 484 Dynes/cm.

Les mesures de porosité sont faites sur des produits séchés à 150°C sous une pression de 1Pa. Les porosités données concernent les pores de diamètres compris entre $10\mu$ et $0,001\mu$.

Une caractéristique intéressante des silices de l'invention est leur densité. Généralement, leur densité de remplissage à l'état tassée (DRT) est d'au moins 0,28 et peut aller jusqu'à 0,37.

Dans le cadre du premier mode de réalisation de l'invention, la densité du produit est supérieure à 0,32, plus particulièrement elle est d'au moins 0,33 et peut ainsi varier entre 0,33 et 0,37.

Cette densité est mesurée selon la norme NET n° 030100.

Une autre caractéristique des silices de l'invention est leur prise d'huile DOP. Celle-ci est généralement d'au plus 270 ml/100 g.

Selon des variantes de l'invention, cette prise DOP est d'au plus 250 ml/100 g, plus particulièrement d'au plus 215 ml/g, ceci notamment dans le cas du second mode de réalisation et elle peut être par exemple comprise entre 180 et 215 ml/100 g.

Cette prise DOP est déterminée selon la norme NET 30-022 (mars 53) en mettant en oeuvre le dioctylphtalate.

Par ailleurs, une caractéristique additionnelle des silices de l'invention est leur surface CTAB. Généralement, celle-ci est d'au plus 130 m2/g, elle peut être plus particulièrement égale ou inférieure à 100 m2/g et notamment d'au plus 90 m2/g.

La surface CTAB est la surface externe déterminée selon la norme NFT 45007 (5.12) (novembre 1987).

On peut aussi envisager des silices pour lesquelles le rapport surface BET/surface CTAB est compris entre 0,9 et 1,2.

Le procédé de préparation des silices décrites ci-dessus va maintenant être étudié.

Ce procédé se caractérise par deux grandes étapes spécifiques : la précipitation et le séchage.

Il est à noter, d'une manière générale, que le procédé concerné est un procédé de synthèse de silice de précipitation, c'est à dire que l'on fait agir un agent acidifiant sur un silicate.

Le choix de l'agent acidifiant et du silicate se fait d'une manière bien connue en soi. On peut rappeller qu'on utilise généralement comme agent acidifiant un acide minéral fort tel que l'acide sulfurique, l'acide nitrique ou l'acide chlorhydrique ou encore un acide organique tel que l'acide acétique, l'acide formique, l'acide carbonique.

On peut par ailleurs utiliser en tant que silicate toute forme courante de silicates tels que metasilicates, disilicates et avantageusement un silicate de metal alcalin notamment le silicate de sodium ou de potassium.

En ce qui concerne plus particulièrement le procédé de préparation de l'invention, la précipitation se fait d'une manière spécifique selon les étapes suivantes.

On forme tout d'abord un pied de cuve qui comprend du silicate ainsi qu'un électrolyte. La quantité de silicate présente dans le pied de cuve peut soit être égale à la quantité totale engagée dans la réaction, soit ne représenter qu'une partie de cette quantité totale.

En ce qui concerne l'électrolyte ce terme s'entend ici dans son acceptation normale, c'est à dire qu'il signifie toute substance ionique ou moléculaire qui, lorsqu'elle est en solution, se décompose ou se dissocie pour former des ions ou des particules chargées.

On utilise en particulier un sel du groupe des sels des métaux alcalins et alcalino-terreux et de préférence le sel du métal de silicate de départ et de l'agent acidifiant par exemple le sulfate de sodium dans le cas de la réaction d'un silicate de sodium avec l'acide sulfurique.

Avantageusement, la concentration en électrolyte est comprise entre 0,05 et 0,7 mole de sel par litre du volume réactionnel dans le cas où le sel (ou électrolyte) est constitué par un sel de métal alcalin et entre 0,001 et 0,01 mole par litre de sel, dans le cas où l'électrolyte est constitué par un sel de métal alcalino-terreux.

La deuxième étape consiste à ajouter l'agent acidifiant dans le pied de cuve de composition décrit plus haut.

Cette addition qui entraîne une baisse corrélative du pH du milieu réactionnel se fait jusqu'à ce qu'on atteigne une valeur d'environ 7, généralement comprise entre 7 et 8.

Une fois cette valeur atteinte, et dans le cas d'un pied de cuve de départ ne comprenant qu'une partie de la quantité totale du silicate engagé, on procède alors à une addition simultanée d'agent acidifiant et de la quantité restante de silicate.

La réaction de précipitation proprement dite est terminée lorsque l'on a ajouté toute la quantité restante de silicate.

Il est avantageux à la fin de la précipitation et notamment après l'addition simultanée précitée, d'effectuer un murissement du milieu réactionnel, ce murissement pouvant par exemple durer de 10 minutes à 1 heure.

Il est enfin possible dans tous les cas après la précipitation, dans une étape ultérieure éventuelle, d'ajouter au milieu réactionnel une quantité supplémentaire d'agent acidifiant. Cette addition se fait généralement jusqu'à l'obtention d'une valeur de pH comprise entre 3 et 6,5 environ.

La température du milieu réactionnel est celle utilisée habituellement dans ce type de procédé et à titre d'exemple elle est comprise entre 60 et 95°C.

On obtient à l'issue des opérations qui viennent d'être décrites, une bouillie qui est ensuite filtrée et lavée. La filtration peut se faire selon toute méthode convenable par exemple un filtre presse ou un filtre à bande ou sous vide.

L'autre étape caractéristique du procédé de l'invention est le séchage.

Le séchage se fait dans des conditions bien spécifiques quant à la nature de la suspension d'une part et quant au type même de séchage utilisé d'autre part puisqu'il s'agit d'une atomisation.

En ce qui concerne tout d'abord la suspension, celle-ci doit présenter un certain nombre de caractéristiques étant entendu ici que ces caractéristiques sont celles que doit présenter la suspension immédiatement avant son séchage.

La suspension doit être riche en matière sèche. Pour cela elle doit présenter un taux de matière sèche d'au moins 18 % en particulier d'au moins 20 % et de préférence d'au moins 25 %.

Cette teneur en matière sèche peut être obtenue directement à la filtration en utilisant un filtre convenable donnant un gâteau de filtration à la bonne teneur. Une autre méthode consiste après la filtration, et à une étape ultérieure du procédé, à rajouter au gâteau de la matière sèche, par exemple de la silice sous forme pulvérulente, de manière à obtenir la teneur nécessaire.

Il y a lieu de noter que, comme cela est bien connu, le gâteau ainsi obtenu n'est pas dans des conditions permettant une atomisation notamment à cause de sa viscosité trop élevée.

D'une manière connue en soi, on soumet le gâteau à une opération de délitage. Cette opération peut se faire par passage du gâteau dans un broyeur de type colloïdal ou à bille. Par ailleurs pour abaisser la viscosité de la suspension à atomiser, il est possible d'ajouter de l'aluminium notamment sous forme d'aluminate de sodium au cours du procédé comme décrit dans FR-A-2536380 dont l'enseignement est incorporé ici. Cette addition peut se faire en particulier au moment même du délitage.

Une autre condition que doit vérifier la suspension avant séchage est une condition de pH. Ce pH doit être d'au moins 4, de préférence d'au moins 4,5 et plus particulièrement compris entre 5 et 7.

L'autre caractéristique de l'étape de séchage tient à la nature même de celui-ci. Comme indiqué plus haut, il s'agit d'un séchage par atomisation.

On peut utiliser tout type d'atomiseur convenable, de préférence les atomiseurs à buse, à pression liquide ou à deux fluides.

Le produit ainsi obtenu est particulièrement apte au renforcement des élastomères. Il est à noter qu'en outre il est peu poussiérant et de bonne coulabilité.

Des exemples concrets vont maintenant être donnés.


## EXEMPLE 1

Dans un réacteur, en acier inoxydable, comportant un système d'agitation par hélices et muni d'un chauffage par double enveloppe, on introduit une solution aqueuse contenant 700 l d'eau, 19 kg de $Na_2SO_4$ et 323 l de silicate de sodium aqueux. Les caractéristiques de ce silicate de sodium aqueux sont les suivantes : rapport pondéral $SiO_2/Na_2O = 3{,}45$, densité à 20°C égale à 1,230. Le mélange constituant le pied de cuve est porté à la température de 94°C tout en le maintenant sous agitation. On introduit 395 litres d'acide sulfurique dilué de densité à 20°C égale à 1,050 jusqu'à l'obtention d'une valeur du pH du milieu réactionnel (mesuré à sa température) égale à 7,5. On introduit ensuite 109 l d'acide du même type avec conjointement 83 l de silicate de sodium aqueux, du type décrit plus haut. Cette introduction simultanée d'acide et de silicate est effectuée de telle sorte que le pH du milieu réactionnel est égal pendant cette période à 7,5 ± 0,1. Après introduction de la totalité du silicate, on continue en introduisant l'acide dilué à un débit de 217 l par heure, pendant 7 minutes supplémentaires. Après cette introduction, le pH est égal à 4.

La durée totale de la réaction est fixée à 85 mn.

La bouillie de silice ainsi obtenue est filtrée et lavée en utilisant un filtre presse.

On obtient ainsi un gâteau de silice présentant une perte au feu de 74%.

Ce gâteau est ensuite fluidifié par action mécanique et chimique (introduction d'aluminate de sodium). Après cette opération de délitage, on obtient un gâteau pompable de pH égal à 6. On réalise l'atomisation de ce gâteau, en utilisant un atomiseur à buses.

Les caractéristiques de la silice séchée obtenues sont les suivantes :

| | |
|---|---|
| pH | = 6,5 (selon NET 45007 de novembre 1987) |
| perte au feu à 900°C | = 10,5 |
| DRT | = 0,310 |
| Prise d'huile D.O.P. | = 251 ml/100 g $SiO_2$ |
| Surface spécifique BET | = 90 m²/g |
| Surface spécifique CTAB | = 84 m2/g |
| Volume poreux total | = 2,95 cm3/g |

La taille moyenne est de 220μm.

EXEMPLE 2

On utilise le gâteau et la silice séchée préparés dans l'exemple 1. Sur un gâteau délité (perte au feu 74%) maintenu sous agitation, on introduit de la silice séchée en quantité suffisante pour atteindre une perte au feu égale à 72%. Le pH du gâteau avant séchage est fixé à 6,1.

On procède ensuite au séchage par recours à un atomiseur à buses. Les caractéristiques de la silice séchée obtenue sont les suivantes :

| | |
|---|---|
| pH | = 6,6 |
| Perte au feu à 900°C | = 9% |
| DRT | = 0,347 |
| Prise d'huile D.O.P. | = 200 ml/100 g silice |
| Surface spécifique BET | = 90 m2/g |
| Surface spécifique CTAB | = 83 m2/g |
| Volume poreux total | = 2,70 m3/g |

La taille moyenne est de 235μm.

EXEMPLE 3

On procède comme pour l'exemple 1 mais avec les différences suivantes :
- on utilise pour former le pied de cuve 689 l d'eau, 19 kg de $Na_2SO_4$ et 334 l de silicate de sodium aqueux
- le pied de cuve est porté à 89°C
- l'introduction d'acide a lieu sur un pied de cuve maintenu à 89°C; 30 mn après le début de la première introduction d'acide, on élève la température de façon à atteindre 93°C
- on arrête l'introduction d'acide 11 minutes après la fin de l'addition simultanée d'acide et de silicate
- la durée totale de la réaction est de 88 mn.

La bouillie de silice obtenue au terme de la réaction est ensuite filtrée en utilisant un filtre presse. Le gâteau obtenu a une perte au feu de 76%.

Ce gâteau est fluidifié (son pH est de 5,9) puis atomisé comme indiqué dans l'exemple 1. Les caractéristiques de la silice séchée sont les suivantes :

| | |
|---|---|
| pH | = 6,5 |
| Perte au feu 900°C | = 6,3 |
| DRT | = 0,30 |
| Prise d'huile D.O.P. | = 264 ml/100 g $SiO_2$ |
| Surface spécifique BET | = 100 m2/g |
| Surface spécifique CTAB | = 93 m2/g |
| Volume poreux total | = 3,05 cm3/g |

La taille moyenne est de 180μm.

EXEMPLE 4

On réalise la précipitation comme indiqué dans l'exemple 1 avec les différences suivantes :
- On utilise en pied de cuve une solution aqueuse de sulfate de sodium contenant 800 l d'eau et 23,6 kg de $Na_2SO_4$ et 223 l de silicate de sodium aqueux.
- Sur le pied de cuve formé et porté à 95°C, on introduit 263 l d'acide sulfurique dilué.
- On introduit ensuite simultanément dans une autre étape 77 l du même acide dilué et 55 l de silicate de sodium aqueux.

En fin de réaction, le pH est égal à 5,2.

La durée totale de la réaction est de 90 mn.

La bouillie de silice est filtrée sur filtre presse, le gâteau résultant a une perte au feu de 73,3% et un pH de 6 après délitage, on sèche par atomisation une partie du gâteau délité.

La silice sèche obtenue est ajoutée à la partie du gâteau délité restante.

Le gâteau résultant a une perte au feu de 71% et un pH de 6,1. Après séchage par atomiseur à buse, on obtient une silice sèche dont les caractéristiques sont les suivantes :

pH = 6,5
Perte au feu 900°C = 9,7
DRT = 0,36
Prise d'huile D.O.P. = 182 ml/100 g $SiO_2$
Surface spécifique BET = 72 m2/g
Surface spécifique CTAB = 67 m2/g
Volume poreux total = 2,55 cm3/g

La taille moyenne est de 240μm.

EXEMPLE 5

On réalise la précipitation comme indiqué dans l'exemple 1 avec les différences suivantes :
- la température de réaction est de 95°C
- on arrête l'introduction d'acide 5 mn après la fin de l'addition simultanée de l'acide et du silicate
- le pH de fin de réaction est de 5.

La bouillie de silice obtenue est filtrée sur filtre presse. Le gâteau résultant présente une perte au feu de 74%.

Le gâteau est délité.

Une partie du gâteau délité est séchée par atomisation.

On ajoute la silice séchée à l'autre partie du gâteau délité, de façon à avoir un gâteau délité de perte au feu égale à 71% et de pH 6,2.

Le séchage par atomisation à buse conduit à une silice séchée présentant les caractéristiques suivantes :

pH = 6,6
Perte au feu = 9
DRT = 0,35
Prise d'huile D.O.P. = 200 ml/ 100 g $SiO_2$
Surface spécifique BET = 80 m2/g
Surface spécifique CTAB = 73 m2/g
Volume poreux total = 2,60 cm3/g

La taille moyenne est de 245μm.

EXEMPLE 6

On réalise la précipitation comme indiqué à l'exemple 1 avec les différences suivantes :
- On utilise en pied de cuve une solution aqueuse de sulfate de sodium contenant 800 l d'eau et 27,5 kg de $Na_2SO_4$ et 223 l de silicate de sodium aqueux.
- La température de réaction est de 95°C.
- Sur le pied de cuve formé et porté à 95°C, on introduit 269 l d'acide sulfurique.
- On introduit ensuite simultanément 77 litres d'acide et 55 l de silicate de sodium aqueux.
- En fin de réaction le pH est de 5,2.

La bouillie de silice obtenue est filtrée sur filtre presse. La perte au feu du gâteau résultant est de 72,5%.

On procède au délitage, la bouillie délitée à un pH de 6 est séchée par atomiseur à buse. La silice obtenue présente les caractéristiques suivantes :

6

pH = 6,5
Perte au feu = 8,3
DRT = 0,33
Prise d'huile D.O.P. = 209 ml/100 g $SiO_2$
Surface spécifique BET = 63 m2/g
Surface spécifique CTAB = 60 m2/g
Volume poreux total = 2,72
     La taille moyenne est de 235μm.

EXEMPLE 7

     Cet exemple concerne l'utilisation de la silice obtenue à l'exemple 2 dans une formulation pour caoutchouc industriel.

     On utilise les deux formulations ci-dessous (en parties, en poids).

| Formulation | A | B |
|---|---|---|
| Vistalon 808 (EPDM monomère éthylène propy-lènediène) | 100 | 100 |
| EVA UL 00218 Ethylènevinyl-acétate | 200 | 200 |
| SILOX 85 (péroxyde) | 1,5 | 1,5 |
| Silice $S_1$ | 50 | 0 |
| Silice $S_2$ | 0 | 50 |

     $S_1$ est la silice selon l'exemple 1.

     $S_2$ est une silice de l'art antérieur selon le brevet européen n°18866. Cette silice présente une surface BET de 185 m2/g, une surface CTAB de 175 m2/g, une densité DRT de 0,25, une granulométrie moyenne de 150μm, un volume poreux de 3,61 cm3/g.

     La mise en oeuvre des formulations se fait de la manière suivante :

     Dans un mélangeur interne, on introduit dans un premier temps le VISTALON, l'EVA et le SILOX.

     Les silices sont introduites dans un deuxième temps.

     La décharge du mélangeur se fait à 140°C. La composition obtenue est extrudée (température en tête d'extrudeuse 150°C) pour former des profilés plats.

     On donne ci-dessous pour les pièces obtenues le module en fonction de l'allongement.

| Allongement | Module en MPa | |
|---|---|---|
| | Pièce avec $S_1$ | Pièce avec $S_2$ |
| 100% | 4,8 | 3,9 |
| 200% | 5 | 4,1 |
| 300% | 5,6 | 4,7 |
| Allongement à la rupture | 680% | 510% |
| Résistance à la rupture | 8 MPa | 6 MPa |

On voit donc que dans des compositions type thermoplastiques, la silice de l'invention améliore nettement le module ainsi que les propriétés aux limites.

## Revendications

**Revendications pour les Etats contractants suivants : AT, BE, CH, DE, DK, FR, GB, GR, IT, LI, LU, NL, SE**

1. Silice se présentant sous forme de bille sensiblement sphérique de taille moyenne d'au moins 80 µm et possédant une surface BET d'au plus 130 m²/g, caractérisée en ce qu'elle possède une densité de remplissage à l'état tassé (DRT) supérieure à 0,32 et un volume poreux total d'au moins 1,6 cm³/g.

2. Silice se présentant sous forme de bille sensiblement sphérique de taille moyenne d'au moins 80 µm, possédant une surface BET comprise entre 100 et 130 m²/g et une densité de remplissage à l'état tassé (DRT) comprise entre 0,28 et 0,32, caractérisée en ce qu'elle possède une surface CTAB inférieure à 100 m²/g et un volume poreux total compris entre 1,6 et 3,3 cm³/g.

3. Silice se présentant sous forme de bille sensiblement sphérique de taille moyenne d'au moins 80 µm et possédant une densité de remplissage à l'état tassé (DRT) comprise entre 0,28 et 0,32, caractérisée en ce qu'elle possède une surface BET inférieure à 100 m²/g.

4. Silice selon la revendication 3, caractérisée en ce qu'elle présente un volume poreux total d'au moins 1,6 cm³/g.

5. Silice selon la revendication 1, 3 ou 4, caractérisée en ce qu'elle présente un volume poreux total d'au plus 3,3 cm³/g.

6. Silice selon la revendication 1, caractérisée en ce qu'elle présente une surface BET inférieure à 100 m²/g.

7. Silice selon la revendication 1, 5 ou 6, caractérisée en ce qu'elle présente une densité d'au moins 0,33, plus particulièrement comprise entre 0,33 et 0,37.

8. Silice selon l'une des revendications précédentes, caractérisée en ce qu'elle présente une prise d'huile DOP d'au plus 270 ml/100 g, plus particulièrement d'au plus 250 ml/100 g et notamment d'au plus 215 ml/100 g.

9. Silice selon l'une des revendications 1 et 3 à 8, caractérisée en ce qu'elle présente une surface BET d'au plus 90 m²/g.

10. Silice selon l'une des revendications 1 et 3 à 10, caractérisée en ce qu'elle présente une surface CTAB d'au plus 130 m²/g, plus particulièrement égale ou inférieure à 100 m²/g et notamment d'au plus 90 m²/g.

11. Silice selon la revendication 2, caractérisée en ce qu'elle présente une surface CTAB d'au plus 90 m²/g.

12. Silice selon l'une des revendications précédentes, caractérisée en ce qu'elle se présente sous forme de bille de taille moyenne supérieure à 100 μm.

13. Silice selon l'une des revendications précédentes, caractérisée en ce qu'elle se présente sous forme de bille de taille moyenne d'au plus 300 μm.

14. Silice selon l'une des revendications précédentes, caractérisée en ce qu'elle présente un rapport surface BET / surface CTAB compris entre 0,9 et 1,2.

15. Procédé de préparation d'une silice selon l'une des revendications 1 à 14 du type comprenant l'obtention d'une suspension de silice par réaction d'un silicate avec un agent acidifiant et précipitation, puis le séchage par atomisation de cette suspension, caractérisée en ce qu'on réalise la précipitation selon les étapes suivantes:
   - on forme un pied de cuve comportant au moins une partie de la quantité totale du silicate engagé dans la réaction et un électrolyte,
   - on ajoute l'agent acidifiant audit pied de cuve jusqu'à l'obtention d'une valeur du pH du milieu réactionnel d'environ 7,
   - on ajoute enfin le cas échéant simultanément au milieu réactionnel de l'agent acidifiant et la quantité restante de silicate,
   et en ce qu'on sèche une suspension présentant un taux de matière sèche d'au moins 18 % en poids et un pH d'au moins 4.

16. Procédé selon la revendication 15, caractérisé en ce qu'après l'addition simultanée d'agent acidifiant et du silicate, on ajoute au milieu réactionnel une quantité supplémentaire d'agent acidifiant.

17. Procédé selon la revendication 16, caractérisé en ce qu'on ajoute une quantité supplémentaire d'agent acidifiant jusqu'à l'obtention d'une valeur du pH du milieu réactionnel comprise entre 3 et 6,5.

18. Procédé selon l'une des revendications 15 à 17, caractérisé en ce que l'électrolyte précité est un sel de métal alcalin ou alcalino-terreux.

19. Procédé selon la revendication 18, caractérisé en ce que l'électrolyte est un sel d'un métal précité et de l'agent acidifiant.

20. Procédé selon l'une des revendications 15 à 19, caractérisé en ce qu'on sèche une suspension présentant un taux de matière sèche d'au moins 25 % en poids.

21. Utilisation comme charge renforçante pour élastomère de la silice selon l'une des revendications 1 à 14 ou de la silice obtenue par le procédé selon l'une des revendications 15 à 20.

**Revendications pour l'Etat contractant suivant : ES**

1. Procédé de préparation d'une silice se présentant sous forme de bille sensiblement sphérique de taille moyenne d'au moins 80 μm et possédant une surface BET d'au plus 130 m²/g, une densité de remplissage à l'état tassé (DRT) supérieure à 0,32 et un volume poreux total d'au moins 1,6 cm³/g, le procédé étant du type comprenant l'obtention d'une suspension de silice par réaction d'un silicate avec un agent acidifiant et précipitation, puis le séchage par atomisation de cette suspension, caractérisé en ce qu'on réalise la précipitation selon les étapes suivantes:
   - on forme un pied de cuve comportant au moins une partie de la quantité totale du silicate engagé dans la réaction et un électrolyte,
   - on ajoute l'agent acidifiant audit pied de cuve jusqu'à l'obtention d'une valeur du pH du milieu réactionnel d'environ 7,

- on ajoute enfin le cas échéant simultanément au milieu réactionnel de l'agent acidifiant et la quantité restante de silicate,

et en ce qu'on sèche une suspension présentant un taux de matière sèche d'au moins 18 % en poids et un pH d'au moins 4.

2. Procédé de préparation d'une silice se présentant sous forme de bille sensiblement sphérique de taille moyenne d'au moins 80 µm et possédant une surface BET comprise entre 100 et 130 m²/g, une densité de remplissage à l'état tassé (DRT) comprise entre 0,28 et 0,32, une surface CTAB inférieure à 100 m²/g et un volume poreux total compris entre 1,6 et 3,3 cm³/g, le procédé étant du type comprenant l'obtention d'une suspension de silice par réaction d'un silicate avec un agent acidifiant et précipitation, puis le séchage par atomisation de cette suspension, caractérisé en ce qu'on réalise la précipitation selon les étapes suivantes:
- on forme un pied de cuve comportant au moins une partie de la quantité totale du silicate engagé dans la réaction et un électrolyte,
- on ajoute l'agent acidifiant audit pied de cuve jusqu'à l'obtention d'une valeur du pH du milieu réactionnel d'environ 7,
- on ajoute enfin le cas échéant simultanément au milieu réactionnel de l'agent acidifiant et la quantité restante de silicate,

et en ce qu'on sèche une suspension présentant un taux de matière sèche d'au moins 18 % en poids et un pH d'au moins 4.

3. Procédé de préparation d'une silice se présentant sous forme de bille sensiblement sphérique de taille moyenne d'au moins 80 µm et possédant une densité de remplissage à l'état tassé (DRT) comprise entre 0,28 et 0,32 et une surface BET inférieure à 100 m²/g le procédé étant du type comprenant l'obtention d'une suspension de silice par réaction d'un silicate avec un agent acidifiant et précipitation, puis le séchage par atomisation de cette suspension, caractérisé en ce qu'on réalise la précipitation selon les étapes suivantes:
- on forme un pied de cuve comportant au moins une partie de la quantité totale du silicate engagé dans la réaction et un électrolyte,
- on ajoute l'agent acidifiant audit pied de cuve jusqu'à l'obtention d'une valeur du pH du milieu réactionnel d'environ 7,
- on ajoute enfin le cas échéant simultanément au milieu réactionnel de l'agent acidifiant et la quantité restante de silicate,

et en ce qu'on sèche une suspension présentant un taux de matière sèche d'au moins 18 % en poids et un pH d'au moins 4.

4. Procédé selon la revendication 3, caractérisé en ce que ladite silice présente un volume poreux total d'au moins 1,6 cm³/g.

5. Procédé selon la revendication 1, 3 ou 4, caractérisé en ce que ladite silice présente un volume poreux total d'au plus 3,3 cm³/g.

6. Procédé selon la revendication 1, caractérisé en ce que ladite silice présente une surface BET inférieure à 100 m²/g.

7. Procédé selon la revendication 1, 5 ou 6, caractérisé en ce que ladite silice présente une densité d'au moins 0,33, plus particulièrement comprise entre 0,33 et 0,37.

8. Procédé selon l'une des revendications précédentes, caractérisé en ce que ladite silice présente une prise d'huile DOP d'au plus 270 ml/100 g, plus particulièrement d'au plus 250 ml/100 g et notamment d'au plus 215 ml/100 g.

9. Procédé selon l'une des revendications 1 et 3 à 8, caractérisé en ce que ladite silice présente une surface BET d'au plus 90 m²/g.

10. Procédé selon l'une des revendications 1 et 3 à 10, caractérisé en ce que ladite silice présente une surface CTAB d'au plus 130 m²/g, plus particulièrement égale ou inférieure à 100 m²/g et notamment d'au plus 90 m²/g.

**11.** Procédé selon la revendication 2, caractérisé en ce que ladite silice présente une surface CTAB d'au plus 90 m$^2$/g.

**12.** Procédé selon l'une des revendications précédentes, caractérisé en ce que ladite silice se présente sous forme de bille de taille moyenne supérieure à 100 $\mu$m.

**13.** Procédé selon l'une des revendications précédentes, caractérisé en ce que ladite silice se présente sous forme de bille de taille moyenne d'au plus 300 $\mu$m.

**14.** Procédé selon l'une des revendications précédentes, caractérisé en ce que ladite silice présente un rapport surface BET / surface CTAB compris entre 0,9 et 1,2.

**15.** Procédé selon l'une des revendications 1 à 14, caractérisé en ce qu'après l'addition simultanée d'agent acidifiant et du silicate, on ajoute au milieu réactionnel une quantité supplémentaire d'agent acidifiant.

**16.** Procédé selon la revendication 15, caractérisé en ce qu'on ajoute une quantité supplémentaire d'agent acidifiant jusqu'à l'obtention d'une valeur du pH du milieu réactionnel comprise entre 3 et 6,5.

**17.** Procédé selon l'une des revendications 1 à 15, caractérisé en ce que l'électrolyte précité est un sel de métal alcalin ou alcalino-terreux.

**18.** Procédé selon la revendication 17, caractérisé en ce que l'électrolyte est un sel d'un métal précité et de l'agent acidifiant.

**19.** Procédé selon l'une des revendications 1 à 18, caractérisé en ce qu'on sèche une suspension présentant un taux de matière sèche d'au moins 25 % en poids.

**20.** Utilisation comme charge renforçante pour élastomère de la silice obtenue par le procédé selon l'une des revendications 1 à 19.

**Patentansprüche**

**Patentansprüche für folgende Vertragsstaaten : AT, BE, CH, DE, DK, FR, GB, GR, IT, LI, LU, NL, SE**

**1.** Kieselsäure im wesentlichen in Kugelform, mit einer mittleren Größe von mindestens 80 $\mu$m und einer BET-Oberfläche von höchstens 130 m$^2$/g, dadurch gekennzeichnet, daß sie eine Stampfdichte (DRT) über 0,32 und ein Gesamtporenvolumen von mindestens 1,6 cm$^3$/g besitzt.

**2.** Kieselsäure im wesentlichen in Kugelform, mit einer mittleren Größe von mindestesn 80 $\mu$m, einer BET-Oberfläche zwischen 100 und 130 m$^2$/g und einer Stampfdichte (DRT) zwischen 0,28 und 0,32, dadurch gekennzeichnet, daß sie eine CTAB-Oberfläche kleiner als 100 m$^2$/g und ein Gesamtporenvolumen zwischen 1,6 und 3,3 cm$^3$/g besitzt.

**3.** Kieselsäure im wesentlichen in Kugelform, mit einer mittleren Größe von mindestens 80 $\mu$m und einer Stampfdichte (DRT) zwischen 0,28 und 0,32, dadurch gekennzeichnet, daß sie eine BET-Oberfläche kleiner als 100 m$^2$/g besitzt.

**4.** Kieselsäure nach Anspruch 3, dadurch gekennzeichnet, daß sie ein Gesamtvolumen von mindestens 1,6 cm$^3$/g aufweist.

**5.** Kieselsäure nach Anspruch 1, 3 oder 4, dadurch gekennzeichnet, daß sie ein Gesamtporenvolumen von höchstens 3,3 cm$^3$/g aufweist.

**6.** Kieselsäure nach Anspruch 1, dadurch gekennzeichnet, daß sie eine BET-Oberfläche kleiner als 100m$^2$/g aufweist.

**7.** Kieselsäure nach Anspruch 1, 5 oder 6, dadurch gekennzeichnet, daß sie eine Dichte von mindestens 0,33, insbesondere zwischen 0,33 und 0,37, aufweist.

8. Kieselsäure nach einem der vorhergehenden Ansprüche, dadurch gekennzeichnet, daß sie eine DOP-Ölaufnahmefähigkeit von höchstens 270 ml/100g, insbesondere von höchstens 250 ml/100 g und speziell von höchstens 215 ml/100g besitzt.

9. Kieselsäure nach einem der Ansprüche 1 und 3 bis 8, dadurch gekennzeichnet, daß sie eine BET-Oberfläche von höchstens 90 m²/g aufweist.

10. Kieselsäure nach einem der Ansprüche 1 und 3 bis 9, dadurch gekennzeichnet, daß sie eine CTAB-Oberfläche von höchstens 130 m²/g, insbesondere von gleich oder kleiner 100 m²/g und speziell von höchstens 90 m²/g aufweist.

11. Kieselsäure nach Anspruch 2, dadurch gekennzeichnet, daß sie eine CTAB-Oberfläche von höchstens 90 m²/g aufweist.

12. Kieselsäure nach einem der vorhergehenden Ansprüche, dadurch gekennzeichnet, daß sie eine Kugelform mit einer mittleren Größe von über 100 µm einnimmt.

13. Kieselsäure nach einem der vorhergehenden Ansprüche, dadurch gekennzeichnet, daß sie eine Kugelform mit der mittleren Größe von höchstens 300 µm einnimmt.

14. Kieselsäure nach einem der vorhergehenden Ansprüche, dadurch gekennzeichnet, daß sie ein Verhältnis von BET-Oberfläche zu CTAB-Oberfläche zwischen 0,9 und 1,2 aufweist.

15. Verfahren zur Herstellung einer Kieselsäure nach einem der Ansprüche 1 bis 14, bei der die Herstellung einer Kieselsäure-Suspension durch Reaktion eines Silikats mit einem Ansäuerungsmittel und Fällung, und Trocknung durch Versprühen dieser Suspension hergestelt wird, dadurch gekennzeichnet, daß man die Fällung nach den folgenden Verfahrensstufen durchführt:
   - es wird ein Ansatz aus mindestens einem Teil der in der Reaktion eingesetzten Silikat-Gesamtmenge und aus einem Elektrolyten hergestellt,
   - dem genannten Ansatz wird das Ansäuerungsmittel zugegeben, bis im Reaktionsgemisch ein pH-Wert von ungefähr 7 erreicht ist,
   - dem Reaktionsgemisch wird gegebenenfalls gleichzeitig das Ansäuerungsmittel und die restliche Silikat-Menge zugegeben,
   und man eine Suspension trocknet, die einen Trockengehalt von mindestens 18 Gew.% und einen pH-Wert von mindestens 4 aufweist, erhält.

16. Verfahren nach Anspruch 15, dadurch gekennzeichnet, daß man dem Reaktionsgemisch nach gemeinsamer Zugabe von Ansäuerungsmittel und Silikat eine zusätzliche Menge des Ansäuerungsrnittels zufügt.

17. Verfahren nach Anspruch 16, dadurch gekennzeichnet, daß man eine zusätzliche Menge des Ansäuerungsmittels bis zum Erreichen eines pH-Wertes zwischen 3 und 6,5 zugibt.

18. Verfahren nach einem der Ansprüche 15 bis 17, dadurch gekennzeichnet, daß der vorgenannte Elektrolyt ein Alkali- oder ein Erdalkalimetallsalz ist.

19. Verfahren nach Anspruch 18, dadurch gekennzeichnet, daß der Elektrolyt aus dem Salz des vorhergenannten Metalles und einem Ansäuerungsmittel ist.

20. Verfahren nach einem der Ansprüche 15 bis 19, dadurch gekennzeichnet, daß man eine Suspension trocknet, die einen Trockensubstanzgehalt von mindestens 25 Gew.% aufweist.

21. Verwendung der Kieselsäure nach einem der Ansprüche 1 bis 14 oder des Siliciumdioxids aus dem Verfahren nach einem der Ansprüche 15 bis 20 als Verstärkungsmittel für Elastomere.

**Patentansprüche für folgenden Vertragsstaat : ES**

1. Herstellungsverfahren für eine im wesentlichen kugelförmige Kieselsäure mit einer mittleren Größe von mindestens 80 µm und mit einer BET-Oberfläche von höchstens 130 m²/g, einer Stampfdichte (DRT) größer als 0,32 und einem Gesamtporenvolumen von mindestens 1,6 cm³/g, wobei dieses Verfahren die Herstellung einer Kieselsäure-Suspension durch Reaktion eines Silikats mit einem Ansäuerungsmittel und durch Fällung, mit anschließender Sprühtrocknung dieser Suspension beinhaltet, dadurch gekennzeichnet, daß die Fällung durch folgende Verfahrensstufen bewirkt wird:
- es wird ein Ansatz aus mindestens einem Teil der in der Reaktion eingesetzten Silikat-Gesamtmenge und aus einem Elektrolyten hergestellt,
- dem genannten Ansatz wird das Ansäuerungsmittel zugegeben, bis zu einem pH-Wert von ungefähr 7 im Reaktionsgemisch,
- dem Reaktionsgemisch wird gegebenenfalls gleichzeitig das Ansäuerungsmittel und die verbleibende Silikat-Menge zugegeben,

und man eine Suspension trocknet, die einen Trockensubstanzgehalt von mindestens 18 Gew.% und einen pH-Wert von mindestens 4 aufweist.

2. Verfahren zur Herstellung einer im wesentlichen kugelförmigen Kieselsäure mit einer mittleren Größe von mindestens 80 μm und mit einer BET-Oberfläche zwischen 100 und 130 m$^2$/g, einer Stampfdichte (DRT) zwischen 0,28 und 0,32, einer CTAB-Oberfläche kleiner als 100 m$^2$/g und einem Gesamtporenvolumen zwischen 1,6 und 3,3 cm$^3$/g, wobei dieses Verfahren die Herstellung einer Suspension von Kieselsäure durch Reaktion eines Silikats mit einem Ansäuerungsmittel und durch Fällung, mit anschließender Sprühtrocknung dieser Suspension beinhaltet, dadurch gekennzeichnet, daß die Fällung nach folgenden Verfahrensschritten durchgeführt wird:
- es wird ein Ansatz aus mindestens einem Teil der in der Reaktion eingesetzten Silikat-Gesamtmenge und aus einem Elektrolyten hergestellt,
- dem genannten Ansatz wird ein Ansäuerungsmittel zugegeben, bis zu einem pH-Wert von ungefähr 7 im Reaktionsgemisch,
- dem Reaktionsgemisch wird gegebenenfalls gleichzeitig das Ansäuerungsmittel und die verbleibende Silikat-Menge zugegeben,

und man eine Suspension trocknet, die einen Trockensubstanzgehalt von mindestens 18 Gew.% und einen pH-Wert von mindestens 4 aufweist.

3. Verfahren zur Herstellung einer im wesentlichen kugelförmigen Kieselsäure mit einer Stampfdichte (DRT) zwischen 0,28 und 0,32 und mit einer BET-Oberfläche kleiner als 100 m$^2$/g, wobei dieses Verfahren die Herstellung einer Suspension von Kieselsäure durch Reaktion eines Silikats mit einem Ansäuerungsmittel und durch Fällung, mit anschließender Sprühtrocknung dieser Suspension beinhaltet, dadurch gekennzeichnet, daß die Fällung nach folgenden Verfahrensschritten durchgeführt wird:
- es wird ein Ansatz aus mindestens einem Teil der in der Reaktion eingesetzten Silikat-Gesamtmenge und aus einem Elektrolyten hergestellt,
- dem genannten Ansatz wird ein Ansäuerungsmittel zugegeben, bis zu einem pH-Wert von ungefähr 7 im Reaktionsgemisch,
- dem Reaktionsgemisch wird gegebenenfalls gleichzeitig das Ansäuerungsmittel und die verbleibende Silikat-Menge zugegeben,

und man eine Suspension trocknet, die einen Trockensubstanzgehalt von mindestens 18 Gew.% und einen pH-Wert von mindestens 4 aufweist.

4. Verfahren nach Anspruch 3, dadurch gekennzeichnet, daß die genannte Kieselsäure ein Gesamtporenvolumen von mindestens 1,6 cm$^3$/g aufweist.

5. Verfahren nach Anspruch 1, 3 oder 4, dadurch gekennzeichnet, daß die genannte Kieselsäure ein Gesamtporenvolumen von höchstens 3,3 cm$^3$/g aufweist.

6. Verfahren nach Anspruch 1, dadurch gekennzeichnet, daß die genannte Kieselsäure eine BET-Oberfläche kleiner als 100 m$^2$/g aufweist.

7. Verfahren nach Anspruch 1, 5 oder 6, dadurch gekennzeichnet, daß die genannte Kieselsäure eine Dichte von mindestens 0,33, insbesondere zwischen 0,33 und 0,37, aufweist.

8. Verfahren nach einem der vorhergehenden Ansprüche, dadurch gekennzeichnet, daß die genannte Kieselsäure eine DOP-Ölaufnahmefähigkeit von höchstens 270 ml/100g, insbesondere von höchstens 250 ml/100g und speziell von höchstens 215 ml/100g, aufweist.

9. Verfahren nach einem der Ansprüche 1 und 3 bis 8, dadurch gekennzeichnet, daß die genannte Kieselsäure eine BET-Oberfläche von höchstens 90 m$^2$/g aufweist.

10. Verfahren nach einem der Ansprüche 1 und 3 bis 9, dadurch gekennzeichnet, daß die genannte Kieselsäure eine CTAB-Oberfläche von höchstens 130 m²/g, insbesondere von gleich oder kleiner 100 m²/g und speziell von höchstens 90 m²/g, aufweist.

11. Verfahren nach Anspruch 2, dadurch gekennzeichnet, daß die genannte Kieselsäure eine CTAB-Oberfläche von höchstens 90 m²/g aufweist.

12. Verfahren nach einem der vorhergehenden Ansprüche, dadurch gekennzeichnet, daß die genannte Kieselsäure eine Kugelform mit der mittleren Größe von über 100 µm einnimmt.

13. Verfahren nach einem der vorhergehenden Ansprüche, dadurch gekennzeichnet, daß die genannte Kieselsäure eine Kugelform mit der mittleren Größe von höchstens 300 µm einnimmt.

14. Verfahren nach einem der vorhergehenden Ansprüche, dadurch gekennzeichnet, daß die genannte Kieselsäure ein Verhältnis von BET-Oberfläche zu CTAB-Oberfläche zwischen 0,9 und 1,2 aufweist.

15. Verfahren nach einem der Ansprüche 1 bis 14, dadurch gekennzeichnet, daß man nach gleichzeitiger Zugabe des Ansäuerungsmittel und des Silikats in das Reaktionsgemisch eine zusätzliche Menge Ansäuerungsmittel zufügt.

16. Verfahren nach Anspruch 15, dadurch gekennzeichnet, daß man bis zum Erreichen eines pH-Wertes zwischen 3 und 6,5 eine zusätzliche Menge von dem Ansäuerungsmittel zufügt.

17. Verfahren nach einem der Ansprüche 1 bis 15, dadurch gekennzeichnet, daß der vorgenannte Elektrolyt ein Alkali- oder Erkalkalimetallsalz ist.

18. Verfahren nach Anspruch 17, dadurch gekennzeichet, daß der Elektrolyt aus dem Salz des vorhergenannten Metalles und einem Ansäuerungsmittel besteht.

19. Verfahren nach einem der Ansprüche 1 bis 18, dadurch gekennzeichnet daß man eine Suspension trocknet wird, die einen Trockensubstanzgehalt von mindestens 25 Gew.% aufweist.

20. Verwendung der Kieselsäure, erhalten durch ein Verfahren nach den Ansprüchen 1 bis 19, als Verstärkungsmittel für Elastomere.

## Claims

### Claims for the following Contracting States : AT, BE, CH, DE, DK, FR, GB, IT, LI, LU, NL, SE

1. Silica in the form of a substantially spherical ball having an average size of at least 80 µm and a BET surface of at the most 130 m²/g, characterized in that it has a filling density in the compressed state exceeding 0.32 and a total pore volume of at least 1.6 cm³/g.

2. Silica in the form of a substantially spherical ball of average size of at least 80 µm, having a BET surface between 100 and 130 m²/g and a filling density in the compressed state between 0.28 and 0.32, characterized in that it has a CTAB surface below 100 m²/g and a total pore volume between 1.6 and 3.3 cm³/g.

3. Silica in the form of a substantially spherical ball having an average size of at least 80 µm and a filling density in the compressed state between 0.28 and 0.32, characterized in that it has a BET surface smaller than 100 m²/g.

4. Silica according to claim 3, characterized in that it has a total pore volume of at least 1.6 cm³/g.

5. Silica according to claim 1, 3 or 4, characterized in that it has a total pore volume of at the most 3.3 cm³/g.

6. Silica according to claim 1, characterized in that it has a BET surface smaller than 100 m²/g.

7. Silica according to claim 1, 5 or 6, characterized in that it has a density of at least 0.33 and more particularly between 0.33 and 0.37.

8. Silica according to one of the preceding claims, characterized in that it has a DOP oil absorption of at the most 270 ml/100 g, more particularly at the most 250 ml/100 g and specifically at the most 215 ml/100 g.

9. Silica according to one of the claims 1 and 3 to 8, characterized in that it has a BET surface of at the most 90 m²/g.

10. Silica according to one of the claims 1 and 3 to 9 , characterized in that it has a CTAB surface of at the most 130 m²/g, more particularly equal to or below 100 m²/g and specifically at the most 90 m²/g.

11. Silica according to claim 2, characterized in that it has a CTAB surface of at the most 90 m²/g.

12. Silica according to one of the preceding claims, characterized in that it is in the form of a ball having an average size greater than 100 μm.

13. Silica according to one of the preceding claims, characterized in that it is in the form of a ball with an average size of at the most 300 μm.

14. Silica according to one of the preceding claims, characterized in that it has a BET/CTAB surface ratio between 0.9 and 1.2.

15. Process for the preparation of a silica according to one of the claims 1 to 14 of the type comprising the obtaining of a silica suspension by reacting a silicate with an acidifying agent and precipitation, followed by drying by atomization of said suspension, characterized in that precipitation is carried out in accordance with the following stages:
   - a sediment is formed incorporating at least part of the total silicate quantity used in the reaction and an electrolyte,
   - the acidifying agent is added to said sediment until a pH value of the reaction medium of approximately 7 is obtained,
   - if appropriate, simultaneously addition takes place to the reaction medium of the acidifying agent and the remaining silicate quantity,
   and in that a suspension having a dry matter level of at least 18% by weight and a pH of at least 4 is dried.

16. Process according to claim 15, characterized in that following the simultaneous addition of the acidifying agent and the silicate, a supplementary acidifying agent quantity is added to the reaction medium.

17. Process according to claim 16, characterized in that a supplementary acidifying agent quantity is added until a pH of the reaction medium between 3 and 6.5 is obtained.

18. Process according to one of the claims 15 to 17, characterized in that the aforementioned electrolyte is an alkali metal or alkaline earth salt.

19. Process according to claim 18, characterized in that the electrolyte is a salt of an aforementioned metal and the acidifying agent.

20. Process according to one of the claims 15 to 19, characterized in that a suspension having a dry matter level of at least 25% by weight is dried.

21. Use as a reinforcing filler for an elastomer of the silica according to one of the claims 1 to 14 or the silica obtained by the process according to one of the claims 15 to 20.

**Claims for the following Contracting State : ES**

1. Process for the preparation of a silica in the form of a substantially spherical ball having an average size of at least 80 μm and having a BET surface of at the most 130 m²/g, a filling density in the compressed state greater than 0.32 and a total pore volume of at least 1.6 cm³/g, the process being of the type comprising the obtaining of a silica suspension by reacting a silicate with an acidifying agent and precipitating, followed by drying by atomization of said suspension, characterized in that the precipitation is carried out according to the following stages:
   - a sediment is formed incorporating at least part of the total silicate quantity used in the reaction and an electrolyte,
- the acidifying agent is added to said sediment until a pH value of the reaction medium of approximately 7 is obtained,
- finally, if appropriate, simultaneous addition takes place to the reaction medium of the acidifying agent and the remaining silicate quantity,
and in that a suspension having a dry matter level of at least 18% by weight and a pH of at least 4 is dried.

2. Process for the preparation of a silica in the form of a substantially spherical ball with an average size of at least 80 um and having a BET surface between 100 and 130 $m^2/g$, a filling density in the compressed state between 0.28 and 0.32, a CTAB surface smaller than 100 $m^2/g$ and a total pore volume between 1.6 and 3.3 $cm^3/g$, the process being of the type comprising the obtaining of a silica suspension by reacting a silicate with an acidifying agent and precipitating, followed by drying by atomization of said suspension, characterized in that the precipitation is carried out according to the following stages:
- a sediment is formed incorporating at least part of the total silicate quantity used in the reaction and an electrolyte,
- the acidifying agent is added to said sediment until a pH value of the reaction medium of approximately 7 is obtained,
- finally, if appropriate, simultaneous addition takes place to the reaction medium of the acidifying agent and the remaining silicate quantity,
and in that a suspension having a dry matter level of at least 18% by weight and a pH of at least 4 is dried.

3. Process for the preparation of a silica in the form of a substantially spherical ball of average size of at least 80 $\mu$m and having a filling density in the compressed state between 0.28 and 0.32 and a BET surface smaller than 100 $m^2/g$, the process being of the type comprising the obtaining of a silica suspension by reacting a silicate with an acidifying agent and precipitating, followed by drying by atomization of the said suspension, characterized in that the precipitation is carried out according to the following stages:
- a sediment is formed incorporating at least part of the total silicate quantity used in the reaction and an electrolyte,
- the acidifying agent is added to said sediment until a pH value of the reaction medium of approximately 7 is obtained,
- finally, if appropriate, simultaneous addition takes place to the reaction medium of the acidifying agent and the remaining silicate quantity,
and in that a suspension having a dry matter level of at least 18% by weight and a pH of at least 4 is dried.

4. Silica according to claim 3, characterized in that it has a total pore volume of at least 1.6 $cm^3/g$.

5. Silica according to claim 1, 3 or 4, characterized in that it has a total pore volume of at the most 3.3 $cm^3/g$.

6. Silica according to claim 1, characterized in that it has a BET surface smaller than 100 $m^2/g$.

7. Silica according to claim 1, 5 or 6, characterized in that it has a density of at least 0.33 and more particularly between 0.33 and 0.37.

8. Silica according to one of the preceding claims, characterized in that it has a DOP oil absorption of at the most 270 ml/100 g, more particularly at the most 250 ml/100 g and specifically at the most 215 ml/100 g.

9. Silica according to one of the claims 1 and 3 to 8, characterized in that it has a BET surface of at the most 90 $m^2/g$.

10. Silica according to one of the claims 1 and 3 to 9, characterized in that it has a CTAB surface of at the most 130 $m^2/g$, more particularly equal to or below 100 $m^2/g$ and specifically at the most 90 $m^2/g$.

11. Silica according to claim 2, characterized in that it has a CTAB surface of at the most 90 $m^2/g$.

12. Silica according to one of the preceding claims, characterized in that it is in the form of a ball having an average size greater than 100 $\mu$m.

13. Silica according to one of the preceding claims, characterized in that it is in the form of a ball with an average size of at the most 300 $\mu$m.

14. Silica according to one of the preceding claims, characterized in that it has a BET/CTAB surface ratio between 0.9 and 1.2.

15. Process according to one of the claims 1 to 14, characterized in that following the simultaneous addition of the acidifying agent and the silicate, a supplementary acidifying agent quantity is added to the reaction medium.

16. Process according to claim 15, characterized in that a supplementary acidifying agent quantity is added until a pH value of the reaction medium between 3 and 6.5 is obtained.

17. Process according to one of the claims 1 to 15, characterized in that the aforementioned electrolyte is an alkali metal or alkaline earth salt.

18. Process according to claim 17, characterized in that the electrolyte is a salt of an aforementioned metal and the acidifying agent.

19. Process according to one of the claims 1 to 18, characterized in that a suspension having a dry matter level of at least 25% by weight is dried.

20. Use as a reinforcing filler for an elastomer of the silica obtained by the process according to one of the claims 1 to 19.